# EUROPEAN PATENT APPLICATION

(11) **EP 4 362 151 A1**
(43) Date of publication of application: **01.05.2024**
(21) Application number: 23195479.3
(22) Date of filing: 05.09.2023
(51) Int. Cl.: H01M 10/04, H01M 50/147, H01M 50/183, H01M 50/533, H01M 50/536, H01M 50/538, H01M 50/566, H01M 10/0587, H01M 10/054, H01M 10/052

(54) **BATTERY CELL AND METHOD OF MANUFACTURING SAME**

(30) Priority: 04.10.2022 JP 2022160376
(71) Applicant: Prime Planet Energy & Solutions, Inc., Chuo-ku Tokyo 103-0022 (JP)
(72) Inventor: MATSUMASA, Yoshitaka, Tokyo, 103-0022 (JP); NISHIJIMA, Hiromasa, Tokyo, 103-0022 (JP)
(74) Representative: Kuhnen & Wacker Patent- und Rechtsanwaltsbüro PartG mbB

(57) **Abstract**

An electrode assembly (130) is accommodated in a case (120) and has an electrode tab (131). A current collector (140) is joined to the electrode tab (131). The electrode tab (131) has a stacking structure of a metal foil. A burring-processed portion (10) is formed at least in the current collector (140) of the electrode tab (131) and the current collector (140), a width of the burring-processed portion (10) in a direction orthogonal to a stacking direction of the metal foil being narrower from the current collector (140) toward the electrode tab (131) along the stacking direction. A laser-welded portion (20) at which the electrode tab (131) and the current collector (140) are joined to each other is formed on the electrode tab (131) side with the electrode tab (131) and the current collector (140) being arranged side by side in the stacking direction.

## Description

### CROSS REFERENCE TO RELATED APPLICATIONS

This nonprovisional application is based on Japanese Patent Application No. 2022-160376 filed on October 4, 2022 with the Japan Patent Office, the entire contents of which are hereby incorporated by reference.

### BACKGROUND OF THE INVENTION

### Field of the Invention

The present technology relates to a battery cell and a method of manufacturing the battery cell.

### Description of the Background Art

Japanese Patent Laying-Open No. 2019-207767 discloses that a protective member provided with a plurality of through holes in a stacking direction of tabs is used at a welded portion between a tab group of an electrode assembly and a conductive member, and a laser emitting device is moved across the plurality of holes.

Japanese Patent No. 6784232 discloses that in a structure in which stacked metal foils of an electrode tab of a secondary battery are welded to a pair of metal plates, the stacked metal foils sandwiched between the pair of metal plates is locally pressed and swaged in a stacking direction at a portion to be welded.

Japanese Patent Laying-Open No. 2013-166182 discloses that a welded portion between stacked metal foils is provided with a cut extending therethrough along a stacking direction by using a cutter having a substantially V-shaped longitudinal cross sectional shape, and the metal foils are brought into close contact with each other at end portions of the cut in the stacking direction.

### SUMMARY OF THE IN VENTION

When the electrode tab and the current collector are joined to each other by forming the laser-welded portion, a welding failure by a void or sputter may occur at the laser-welded portion. Therefore, there is room for improvement in forming an excellent laser-welded portion for joining the electrode tab and the current collector.

The present technology has been made to solve the above-described problem and has an object to provide a battery cell and a method of manufacturing the battery cell so as to form an excellent laser-welded portion for joining an electrode tab and a current collector.

The present technology provides the following battery cell.
[1] A battery cell comprising:
   a case including a main body provided with an opening, and a sealing plate that seals the main body;
   an electrode assembly accommodated in the case and having an electrode tab; and
   a current collector joined to the electrode tab, wherein
      the electrode tab has a stacking structure of a metal foil,
      a burring-processed portion is formed at least in the current collector of the electrode tab and the current collector, a width of the burring-processed portion in a direction orthogonal to a stacking direction of the metal foil being narrower from the current collector toward the electrode tab along the stacking direction, and
      a laser-welded portion at which the electrode tab and the current collector are joined to each other is formed on the electrode tab side with the electrode tab and the current collector being arranged side by side in the stacking direction.
[2] The battery cell according to [1], wherein
   in the burring-processed portion, an outer shape line is defined on a surface of the current collector opposite to the electrode tab, and
   the laser-welded portion is formed at least in an entire region inside the outer shape line when viewed in the stacking direction.
[3] The battery cell according to [2], wherein the laser-welded portion is formed in the entire region inside the outer shape line and in a range of 5 mm or less outside the outer shape line when viewed in the stacking direction.
[4] The battery cell according to any one of [1] to [3], wherein the burring-processed portion in the electrode tab is formed to have a depth of 70% or more of a total thickness of the electrode tab.
[5] The battery cell according to any one of [1] to [4], wherein
   the electrode tab has a first region and a second region, the first region being a region that protrudes opposite to the current collector with a vertex of the burring-processed portion as a center, the second region being a region that is located around the first region and that forms a substantially flat surface, and
   the laser-welded portion is located at least in the second region.
[6] The battery cell according to any one of [1] to [5], wherein the burring-processed portion has a substantially conical shape.
[7] The battery cell according to any one of [1] to [5], wherein the burring-processed portion has a substantially square pyramid shape.
[8] The battery cell according to any one of [1] to [7], wherein the electrode tab and the current collector constitute a portion of a negative electrode of the electrode assembly.
   The present technology provides the following method of manufacturing a battery cell.
[9] A method of manufacturing a battery cell, the method comprising:
   producing an electrode assembly including an electrode tab having a stacking structure of a metal foil;
   disposing a current collector on the electrode tab;
   performing a burring process onto the electrode tab and the current collector from the current collector side with the electrode tab and the current collector being arranged side by side in a stacking direction of the metal foil,
   performing laser welding onto the electrode tab and the current collector from the electrode tab side with the electrode tab and the current collector being arranged side by side in the stacking direction;
   accommodating the electrode assembly and the current collector in a case main body; and
   sealing, with a sealing plate, the case main body in which the electrode assembly and the current collector are accommodated.
[10] The method of manufacturing the battery cell according to [9], wherein
   in the burring process, an outer shape line is defined on a surface of the current collector opposite to the electrode tab, and
   the laser welding is performed at least onto an entire region inside the outer shape line when viewed in the stacking direction.
[11] The method of manufacturing the battery cell according to [10], wherein the laser welding is performed onto the entire region inside the outer shape line and a range of 5 mm or less outside the outer shape line when viewed in the stacking direction.
[12] The method of manufacturing the battery cell according to any one of [9] to [11], wherein the burring process in the electrode tab is performed to a depth of 70% or more of a total thickness of the electrode tab.
[13] The method of manufacturing the battery cell according to any one of [9] to [12], wherein
   a first region and a second region are formed in the electrode tab, the first region being a region that protrudes opposite to the current collector with a vertex in the burring process as a center, the second region being a region that is located around the first region and that forms a substantially flat surface, and
   the laser welding is performed onto at least the second region.
[14] The method of manufacturing the battery cell according to any one of [9] to [13], wherein the burring process is performed in a form of a substantially conical shape.
[15] The method of manufacturing the battery cell according to any one of [9] to [13], wherein the burring process is performed in a form of a substantially square pyramid shape.
[16] The method of manufacturing the battery cell according to any one of [9] to [15], wherein the electrode tab and the current collector constitute a portion of a negative electrode of the electrode assembly. The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a configuration of a battery cell according to a first embodiment of the present technology.
Fig. 2 is an exploded perspective view showing the configuration of the battery cell according to the first embodiment of the present technology.
Fig. 3 is a perspective view showing a configuration of an electrode assembly according to the first embodiment of the present technology.
Fig. 4 is a schematic view showing a joining portion of the battery cell according to the first embodiment of the present technology.
Fig. 5 is a cross sectional view of the joining portion of Fig. 4 when viewed in a direction of arrow V-V.
Fig. 6 is a cross sectional view showing surroundings around a burring-processed portion in an electrode tab according to the first embodiment of the present technology.
Fig. 7 is a schematic view showing surroundings around an outer shape line of the burring-processed portion of the electrode tab.
Fig. 8 is a flowchart showing a method of manufacturing the battery cell according to the first embodiment of the present technology.
Fig. 9 is a perspective view showing a state in which a current collector is disposed on the electrode assembly.
Fig. 10 is a cross sectional view showing a state in which the burring-processed portion is formed in the electrode tab.
Fig. 11 is a perspective view showing a state in which the electrode tab is irradiated with a laser.
Fig. 12 is a perspective view showing a state in which the current collector and a sealing plate are connected to each other.
Fig. 13 is a perspective view showing a state in which the electrode assembly is inserted in a case main body.
Fig. 14 is a schematic view showing a joining portion between an electrode tab and a current collector in a battery cell according to a comparative example.
Fig. 15 is a cross sectional view showing surroundings around a burring-processed portion in an electrode tab according to a second embodiment of the present technology.
Fig. 16 is a top view showing a joining portion of a battery cell according to a third embodiment of the present technology.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium ion battery. In the present specification, the term "electrode" may collectively represent a positive electrode and a negative electrode.

In the present specification, the term "battery cell" is not necessarily limited to a prismatic battery cell and may include a cell having another shape, such as a cylindrical battery cell.

Further, the "battery cell" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

It should be noted that in the figures, an X direction represents a direction in which a positive electrode terminal and a negative electrode terminal of the battery cell are arranged side by side, a Y direction represents a direction in which a plurality of battery cells are stacked, and a Z direction represents a height direction of the battery cell.

### (First Embodiment)

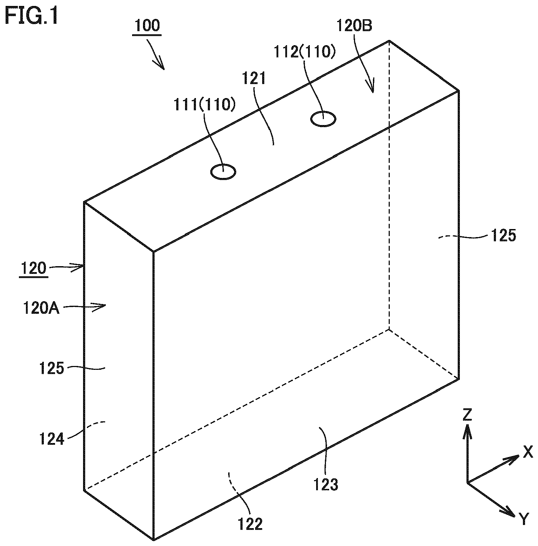

Fig. 1 is a perspective view showing a configuration of a battery cell according to a first embodiment of the present technology. As shown in Fig. 1, battery cell 100 has a prismatic shape. Battery cell 100 has electrode terminals 110, and a case 120 (exterior container). That is, battery cell 100 is a prismatic secondary battery cell.

Electrode terminals 110 are formed on case 120. Electrode terminals 110 have a positive electrode terminal 111 and a negative electrode terminal 112 arranged side by side along the X direction. Positive electrode terminal 111 and negative electrode terminal 112 are provided to be separated from each other in the X direction.

Case 120 has a rectangular parallelepiped shape and forms an external appearance of battery cell 100. Case 120 includes: a case main body 120A provided with an opening; and a sealing plate 120B that seals the opening of case main body 120A. Sealing plate 120B is joined to case main body 120A by welding.

Case 120 has an upper surface 121, a lower surface 122, a first side surface 123, a second side surface 124, and two third side surfaces 125.

Upper surface 121 is a flat surface orthogonal to the Z direction. Electrode terminals 110 are disposed on upper surface 121. Upper surface 121 in the present embodiment corresponds to sealing plate 120B. Lower surface 122 faces upper surface 121 in the Z direction.

Each of first side surface 123 and second side surface 124 is constituted of a flat surface orthogonal to the Y direction. Each of first side surface 123 and second side surface 124 has the largest area among the areas of the plurality of side surfaces of case 120. Each of first side surface 123 and second side surface 124 has a rectangular shape in which the X direction corresponds to the long-side direction and the Z direction corresponds to the short-side direction when viewed in the Y direction. Two third side surfaces 125 are arranged side by side in the X direction so as to face each other. Two third side surfaces 125 connect first side surface 123 and second side surface 124 at their end portions in the X direction.

When a plurality of battery cells 100 are connected in series, the plurality of battery cells 100 are stacked such that first side surfaces 123 of battery cells 100, 100 adjacent to each other in the Y direction face each other and second side surfaces 124 of battery cells 100, 100 adjacent to each other in the Y direction face each other. Thus, positive electrode terminals 111 and negative electrode terminals 112 are alternately arranged in the Y direction in which the plurality of battery cells 100 are stacked.

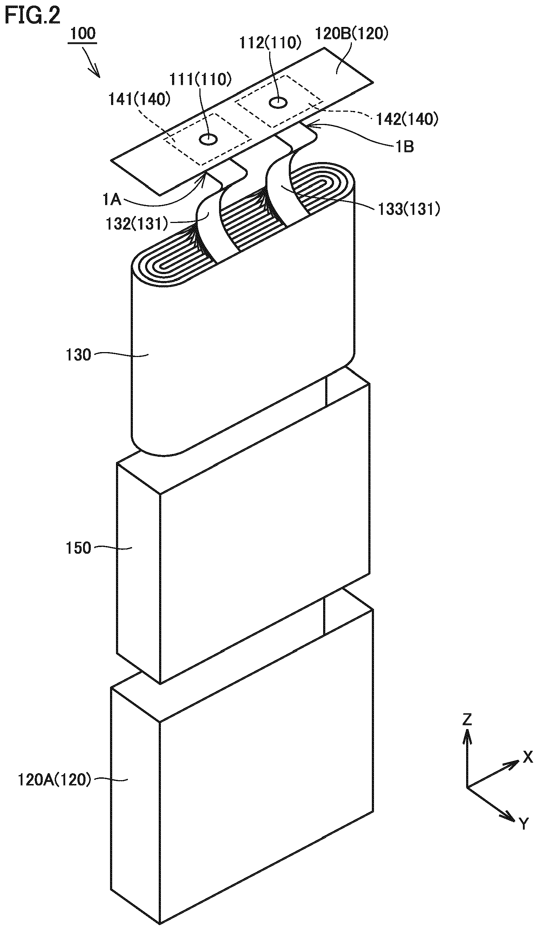

Fig. 2 is an exploded perspective view showing the configuration of the battery cell according to the first embodiment of the present technology. As shown in Fig. 2, in battery cell 100, an electrode assembly 130, current collectors 140, an electrode assembly holder 150, and an electrolyte solution (not shown) are accommodated in case 120.

Electrode terminals 110 are fixed to sealing plate 120B with an insulating member (not shown), which is composed of a resin, being interposed therebetween. In electrode assembly 130, a positive electrode tab 132 and a negative electrode tab 133, which are electrode tabs 131, are formed on the sealing plate 120B side. Current collectors 140 are joined to positive electrode tab 132 and negative electrode tab 133.

Current collectors 140 include a positive electrode current collector 141 and a negative electrode current collector 142. Positive electrode current collector 141 is connected to positive electrode terminal 111. Positive electrode current collector 141 is composed of aluminum or an aluminum alloy, for example. Negative electrode current collector 142 is connected to negative electrode terminal 112. Negative electrode current collector 142 is composed of copper or a copper alloy, for example. The thickness of current collector 140 is 0.8 mm, for example.

Electrode terminals 110 and electrode assembly 130 are electrically connected together through current collectors 140. Specifically, positive electrode tab 132 is joined to positive electrode current collector 141 at a joining portion 1A. Thus, positive electrode terminal 111 and positive electrode tab 132 are electrically connected to each other through positive electrode current collector 141. Negative electrode tab 133 is joined to negative electrode current collector 142 at a joining portion 1B. Thus, negative electrode terminal 112 and negative electrode tab 133 are electrically connected to each other through negative electrode current collector 142.

Electrode assembly holder 150 is a sheet having an insulating property. Electrode assembly holder 150 covers the perimeter of electrode assembly 130. Electrode assembly holder 150 is located between case main body 120A and electrode assembly 130 so as to hold electrode assembly 130 while insulating case 120 and electrode assembly 130 from each other.

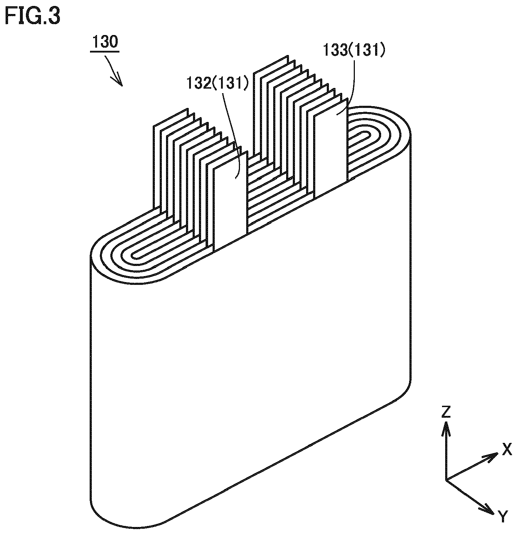

Fig. 3 is a perspective view showing a configuration of the electrode assembly according to the first embodiment of the present technology. As shown in Fig. 3, electrode assembly 130 according to the present embodiment is of wound type. It should be noted that one electrode assembly 130 is accommodated in case 120 in the present embodiment; however, a plurality of electrode assemblies may be accommodated in case 120. Further, electrode assembly 130 is not limited to the wound type, and may be of a stack type.

Electrode assembly 130 includes a positive electrode, a negative electrode, and a separator. A substrate included in the positive electrode is, for example, an aluminum foil or an aluminum alloy foil. A substrate included in the negative electrode is, for example, a copper foil or a copper alloy foil.

Each of the positive electrode, the negative electrode, and the separator is a strip-shaped sheet. The separator is sandwiched between the positive electrode and the negative electrode. Electrode assembly 130 is formed by winding a stack of the positive electrode, the negative electrode, and the separator. Electrode assembly 130 may be shaped to be flat after the winding.

Negative electrode tab 133 serving as electrode tab 131 is formed by winding the stack of the positive electrode, the negative electrode, and the separator to arrange such that upward extending portions of the strip-shaped sheet of the negative electrode in the Z direction are stacked. Thus, negative electrode tab 133 has a stacking structure of metal foils. Negative electrode tab 133 is formed by stacking, for example, 50 metal foils. The thickness of one metal foil is 8 µm, for example. As with negative electrode tab 133, positive electrode tab 132 is also constituted of a portion of the strip-shaped sheet of the positive electrode.

It should be noted that positive electrode tab 132 and negative electrode tab 133 are arranged on the sealing plate 120B side of electrode assembly 130 in the Z direction; however, the arrangement of positive electrode tab 132 and negative electrode tab 133 is not limited thereto. The positive electrode tab and the negative electrode tab may be formed separately on both sides of the electrode assembly in the X direction. In this case, an axis around which the electrode assembly is wound is along the X direction.

Next, a structure of the joining portion between electrode tab 131 and current collector 140 will be described. It should be noted that joining portion 1B between negative electrode tab 133 and negative electrode current collector 142 will be described in the following description; however, the same structure as that of joining portion 1B can be applied to joining portion 1A between positive electrode tab 132 and positive electrode current collector 141.

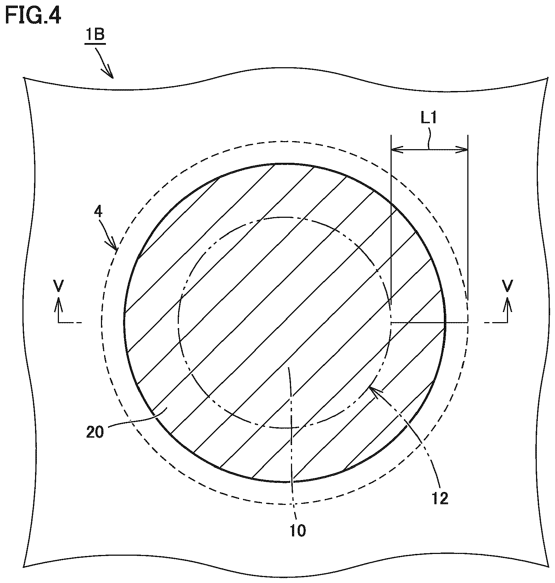

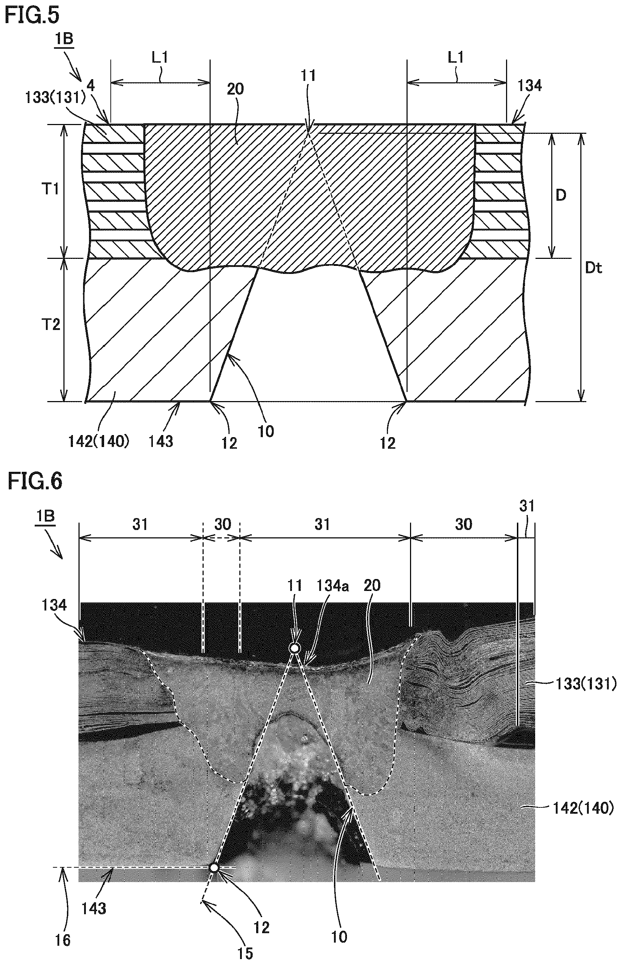

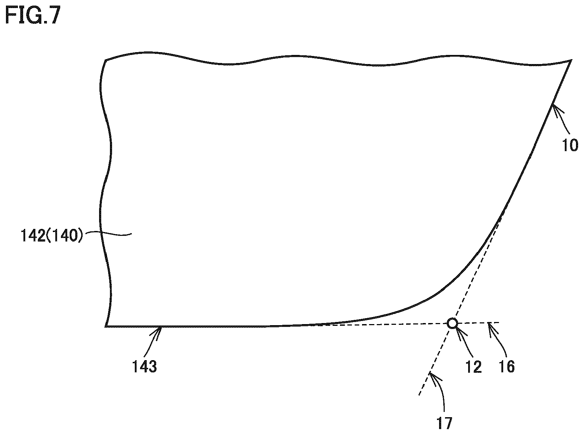

Fig. 4 is a schematic view showing the joining portion of the battery cell according to the first embodiment of the present technology. Fig. 5 is a cross sectional view of the joining portion of Fig. 4 when viewed in a direction of arrow V-V. Fig. 6 is a cross sectional view showing surroundings around a burring-processed portion in the electrode tab according to the first embodiment of the present technology. Fig. 7 is a schematic view showing surroundings around an outer shape line of the burring-processed portion of the electrode tab.

As shown in Figs. 4 to 7, joining portion 1B includes a burring-processed portion 10 and a laser-welded portion 20.

Burring-processed portion 10 is formed at least in current collector 140 of electrode tab 131 and current collector 140. Burring-processed portion 10 in the present embodiment is formed in negative electrode current collector 142 with negative electrode tab 133 and negative electrode current collector 142 being placed on each other. It should be noted that in a state before laser-welded portion 20 is formed, burring-processed portion 10 is formed in both negative electrode tab 133 and negative electrode current collector 142. Burring-processed portion 10 is formed along the stacking direction of the metal foils included in negative electrode tab 133.

A width of burring-processed portion 10 in a direction orthogonal to the stacking direction of the metal foil is narrower from negative electrode current collector 142 toward negative electrode tab 133. That is, burring-processed portion 10 has a tapered shape. Burring-processed portion 10 according to the present embodiment has a substantially conical shape. A tip angle of burring-processed portion 10 in the present embodiment is, for example, 40°.

The metal foils are likely to be in close contact with each other due to burrs generated during the burring process, thus resulting in one bundled stacking structure of the metal foils. Regarding this point, in a compression process of compressing the stacking structure of the metal foils to flatten the metal foils, it is difficult to bundle the metal foils, with the result that a clearance may be formed between the metal foils. In order to securely avoid such a clearance between the metal foils, a significantly large compressive load is required. On the other hand, in battery cell 100 according to the present embodiment, since the burring process (hole forming process) is employed instead of the compression process, a close contact structure between the metal foils can be attained with a relatively smaller load than that in the compression process.

Further, with the burring process, an oxide film of each metal foil can be removed before being bundled into one. By bundling the metal foils into one, an influence of thermal strains (elongation and deflection of the metal foils) during laser welding can be suppressed. When the metal foils are bundled by temporary welding, thermal strains are generated in the metal foils, whereas no thermal strain is generated in the burring process.

A vertex 11 and an outer shape line 12 are defined in burring-processed portion 10. It should be noted that each of vertex 11 and outer shape line 12 may actually exist or may be defined imaginarily.

Vertex 11 is defined by a processed shape. Vertex 11 is a tip portion of burring-processed portion 10. As shown in Figs. 5 and 6, in the present embodiment, since laser-welded portion 20 is formed to overlap with burring-processed portion 10 in the stacking direction after burring-processed portion 10 is formed, vertex 11 is imaginarily defined. Vertex 11 is defined as an intersection point of imaginary lines drawn from a frustum portion of burring-processed portion 10 toward the tip side.

It should be noted that as shown in Fig. 6, when laser-welded portion 20 is formed, negative electrode tab 133 or negative electrode current collector 142 melted by the laser welding may enter an internal space of burring-processed portion 10, with the result that laser-welded portion 20 may be depressed to the negative electrode current collector 142 side. Thus, vertex 11 may be defined above a tab surface 134a that is included in a tab surface 134 of electrode tab 131 opposite to current collector 140, that is arranged side by side with laser-welded portion 20 in the stacking direction, and that is located on the welded portion.

As shown in Figs. 5 to 7, outer shape line 12 is located on a surface 143 of negative electrode current collector 142 opposite to negative electrode tab 133. As shown in Figs. 4 and 5, when burring-processed portion 10 is schematically shown, outer shape line 12 corresponds to an edge of a processing trace of burring-processed portion 10 in surface 143 of negative electrode current collector 142.

As shown in Figs. 6 and 7, in burring-processed portion 10 of the present embodiment, since negative electrode current collector 142 is deformed toward the tip portion of burring-processed portion 10 during the burring process, a boundary between the conical shape of burring-processed portion 10 and surface 143 is curved. In this case, as shown in Fig. 7, outer shape line 12 is imaginarily defined by continuously connecting intersection points of a flat straight line 16 along surface 143 and an extension line 17 of the conical shape of burring-processed portion 10 in a peripheral direction.

As shown in Fig. 5, burring-processed portion 10 of negative electrode tab 133 is formed to have a depth D of 70% or more of a total thickness T1 of negative electrode tab 133 in the stacking direction of the metal foils. Depth D of burring-processed portion 10 is a distance from an end surface of negative electrode tab 133 on the negative electrode current collector 142 side to vertex 11 in the stacking direction of the metal foils. Total thickness T1 of negative electrode tab 133 is a thickness in the stacking direction at a position at which the metal foils not affected by the processing of burring-processed portion 10 and laser-welded portion 20 are stacked in close contact with each other after the processing.

The surface shape of negative electrode current collector 142 on the negative electrode tab 133 side may become obscure depending on a degree of burring process or laser welding, with the result that it may be difficult to distinguish the position of the end surface of negative electrode tab 133 on the negative electrode current collector 142 side in the stacking direction of the metal foils. In this case, a total depth Dt of burring-processed portion 10 is defined by a distance from surface 143 of negative electrode current collector 142 to vertex 11 in the stacking direction of the metal foils. On this occasion, depth D of burring-processed portion 10 may be calculated by subtracting, from total depth Dt of burring-processed portion 10, a thickness T2 of the portion of negative electrode current collector 142 not affected by the burring process.

When negative electrode tab 133 is constituted of the 50 metal foils, depth D of burring-processed portion 10 is desirably constituted of a depth of 90% or more of total thickness T1 of negative electrode tab 133. Thus, the metal foils of negative electrode tab 133 can be sufficiently brought into close contact with each other.

Depth D of burring-processed portion 10 can be measured in, for example, the following manner: joining portion 1B is cut at a cross section orthogonal to the stacking direction of the metal foils and passing through vertex 11, and the cross section is observed using a metal microscope or the like.

Laser-welded portion 20 joins negative electrode tab 133 and negative electrode current collector 142 to each other. Laser-welded portion 20 is formed on the negative electrode tab 133 side so as to join negative electrode tab 133 and negative electrode current collector 142 to each other with negative electrode tab 133 and negative electrode current collector 142 being arranged side by side in the stacking direction of the metal foils.

As shown in Figs. 4 and 5, laser-welded portion 20 is formed at least in the entire region inside outer shape line 12 when viewed in the stacking direction of the metal foils. Laser-welded portion 20 in the present embodiment is formed in the entire region inside outer shape line 12 and in a range of 5 mm (L1) or less outside outer shape line 12 when viewed in the stacking direction of the metal foils. Thus, negative electrode tab 133 and negative electrode current collector 142 are joined to each other at joining portion 1B within a range of a joining region 4 constituted of burring-processed portion 10 and laser-welded portion 20.

It should be noted that the shape of laser-welded portion 20 is a circular shape when viewed in the stacking direction of the metal foils; however, it is not limited thereto and laser-welded portion 20 may have a shape such as an elliptical shape or a quadrangular shape. The conical shape of burring-processed portion 10 includes a shape obtained by combining a conical shape and a cylindrical shape side by side in the stacking direction.

As shown in Fig. 6, negative electrode tab 133 has a first region 30 and a second region 31. First region 30 is formed by the processing of burring-processed portion 10. First region 30 is a region in which a clearance is formed between the stacked metal foils due to deflection being formed in the metal foils by the burring process. First region 30 protrudes opposite to negative electrode current collector 142 with vertex 11 of burring-processed portion 10 as a center.

Second region 31 is located around first region 30 in the direction orthogonal to the stacking direction, and forms a substantially flat surface in the direction orthogonal to the stacking direction. Second region 31 is a region in which the metal foils are in close contact with each other due to no clearance being formed between the stacked metal foils or due to the clearance being minimized.

Laser-welded portion 20 is located at least in second region 31. In the present embodiment, laser-welded portion 20 is located in a portion of first region 30 and second region 31. First region 30 may cease to exist when second region 31 around first region 30 is laser-welded to propagate heat of second region 31 to first region 30 to thereby melt first region 30.

As described above, since negative electrode tab 133 and negative electrode current collector 142 are joined to each other by burring-processed portion 10 and laser-welded portion 20, negative electrode tab 133 and negative electrode current collector 142 constitute a portion of the negative electrode in electrode assembly 130. When copper in the negative electrode exists in battery cell 100 as a foreign substance such as a sputter, voltage failure is caused in battery cell 100. Therefore, when the occurrence of the sputter of copper in the negative electrode is suppressed, the voltage failure of battery cell 100 is suppressed.

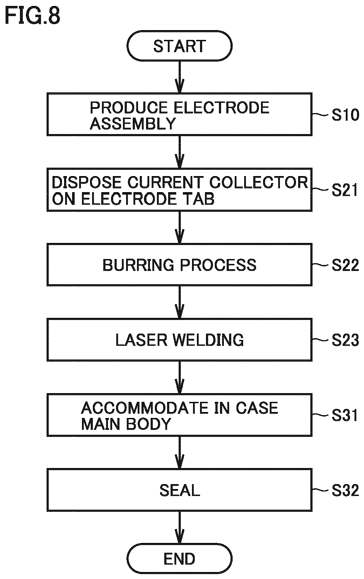

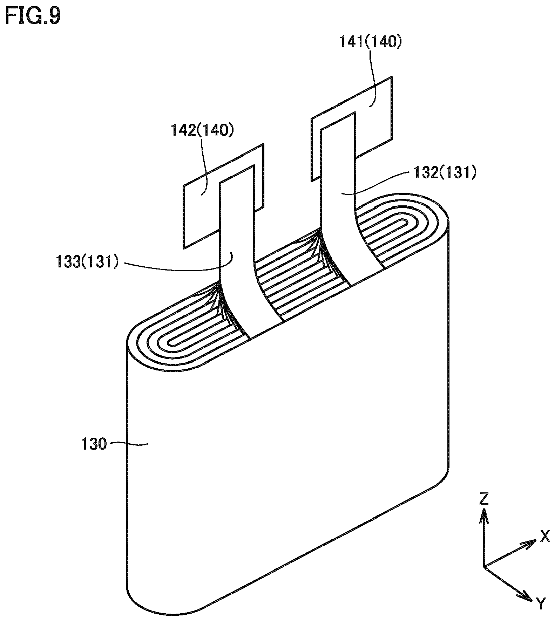

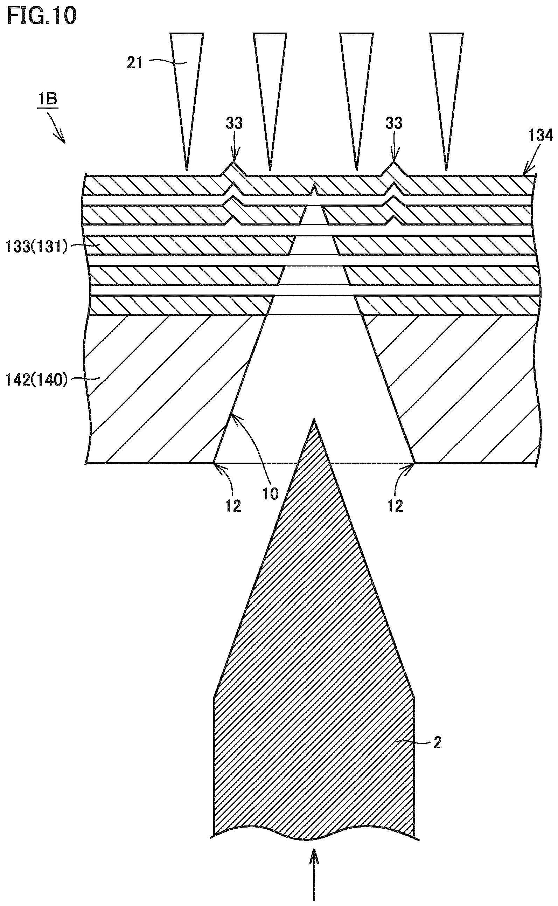

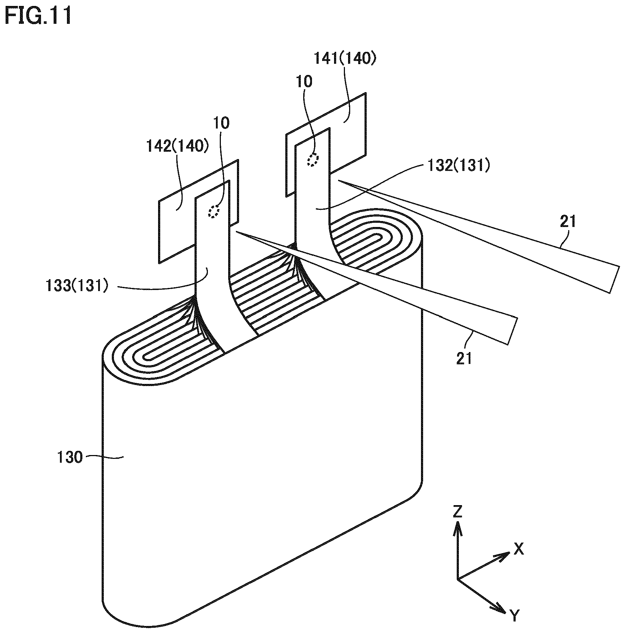

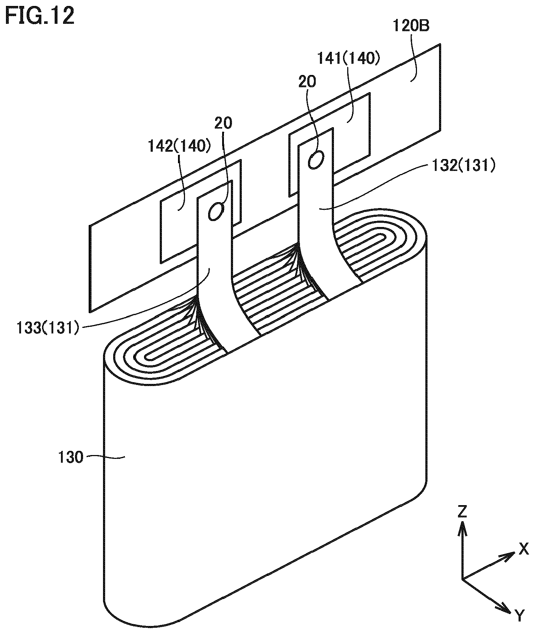

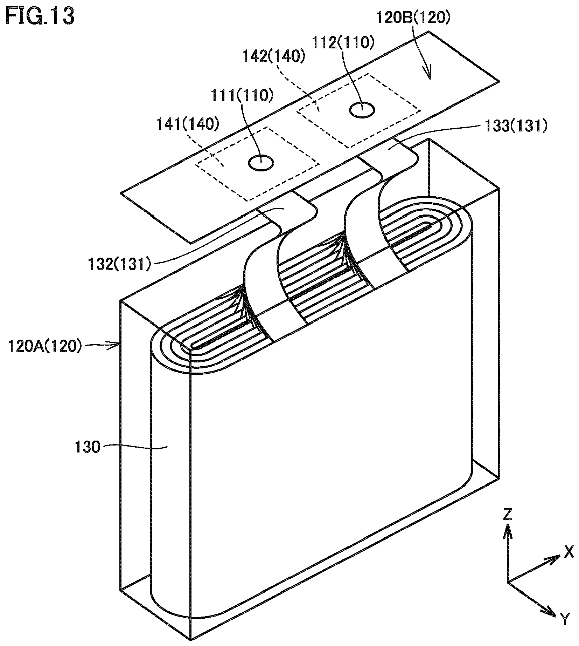

Hereinafter, a method of manufacturing the battery cell according to the first embodiment of the present technology will be described. Fig. 8 is a flowchart showing the method of manufacturing the battery cell according to the first embodiment of the present technology. Fig. 9 is a perspective view showing a state in which the current collector is disposed on the electrode assembly. Fig. 10 is a cross sectional view showing a state in which the burring-processed portion is formed in the electrode tab. Fig. 11 is a perspective view showing a state in which the electrode tab is irradiated with a laser. Fig. 12 is a perspective view showing a state in which the current collector and the sealing plate are connected to each other. Fig. 13 is a perspective view showing a state in which the electrode assembly is inserted in the case main body. It should be noted that each of Figs. 10 and 11 shows that negative electrode tab 133 is subjected to the burring process or the laser welding; however, the same process can be applied to positive electrode tab 132. For ease of understanding of the invention, case 120 is shown as being seen through in Fig. 13.

As the method of manufacturing battery cell 100 according to the present embodiment, first, electrode assembly 130 including electrode tab 131 having the stacking structure of the metal foils is produced as shown in Figs. 8 and 9 (step S10). Next, current collector 140 is disposed on electrode tab 131 (step S21).

Next, as shown in Fig. 8 and Fig. 10, the burring process is performed onto negative electrode tab 133 and negative electrode current collector 142 from the negative electrode current collector 142 side with negative electrode tab 133 and negative electrode current collector 142 being arranged side by side in the stacking direction of the metal foils (step S22). The burring process is performed using a burring pin 2 in the form of a conical shape when viewed in the stacking direction. Since the tip of burring pin 2 is sharp, burring pin 2 can be readily pulled out from negative electrode tab 133 after the process.

As shown in Fig. 10, negative electrode tab 133 has deflection portions 33. Each of deflection portions 33 is a wavy portion resulting from the metal foils being deflected opposite to negative electrode current collector 142 of negative electrode tab 133. Deflection portion 33 is formed in the following manner: by the process on burring-processed portion 10, the metal foils are pushed and spread with burring-processed portion 10 as a center in the direction orthogonal to the stacking direction. Deflection portion 33 has a clearance between the stacked metal foils.

A region located around deflection portion 33 in the direction orthogonal to the stacking direction forms a substantially flat surface. The region located around deflection portion 33 is a region in which the metal foils are in close contact with each other due to no clearance being formed between the stacked metal foils or due to the clearance being minimized.

Next, as shown in Figs. 8, 10, and 11, laser welding is performed onto electrode tab 131 and current collector 140 from the electrode tab 131 side with electrode tab 131 and current collector 140 being arranged side by side in the stacking direction of the metal foils (step S23). It should be noted that the laser beam diameter of laser 21 to form laser-welded portion 20 and the number of times of irradiating therewith can be appropriately changed. Next, as shown in Fig. 12, current collector 140 and sealing plate 120B are connected to each other.

Next, as shown in Figs. 8 and 13, electrode assembly 130 and current collector 140 are accommodated in case main body 120A (step S31). Finally, case main body 120A having electrode assembly 130 and current collector 140 accommodated therein is sealed with sealing plate 120B (step S32). By the above-described manufacturing process, battery cell 100 shown in Fig. 1 is manufactured.

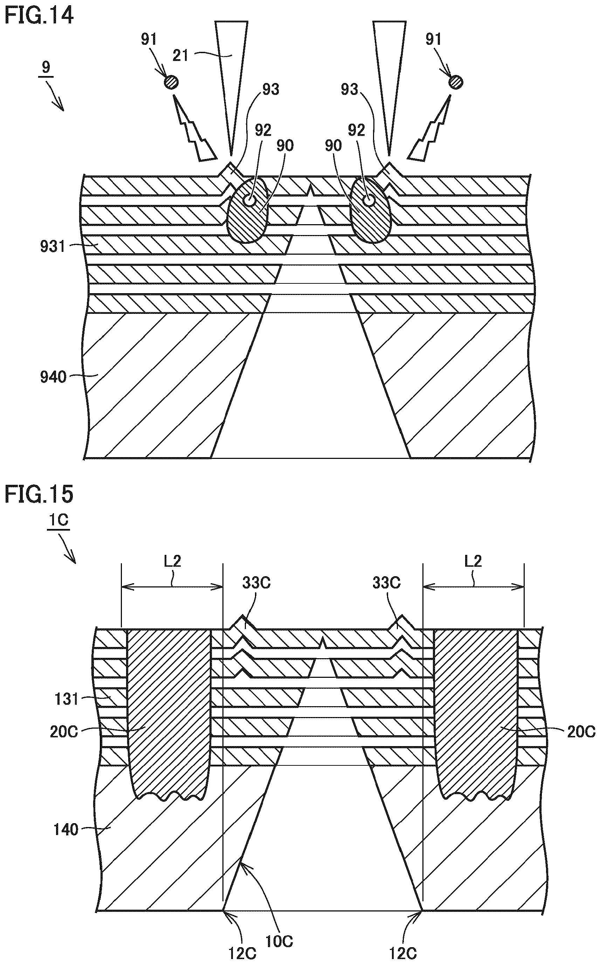

Here, joining between an electrode tab and a current collector of a battery cell according to a comparative example will be described. Fig. 14 is a schematic view showing a joining portion between the electrode tab and the current collector in the battery cell according to the comparative example. It should be noted that Fig. 14 shows a state in the course of formation of a laser-welded portion.

As shown in Fig. 14, at a joining portion 9 of the battery cell according to the comparative example, laser-welding is performed onto deflection portions 93 of an electrode tab 931. A laser-welded portion 90 is formed with each deflection portion 93 as a base point.

When laser-welded portion 90 is formed, a clearance is formed between the metal foils in electrode tab 931 around deflection portion 93. When electrode tab 931 having the clearance formed therein is irradiated with a laser 21, welding is likely to be performed with air or the like being introduced, with the result that a sputter 91 or a void 92 is generated. Therefore, in the joining between electrode tab 931 and current collector 940 in the comparative example, joining failure is likely to occur.

On the other hand, as shown in Fig. 10, in the joining between electrode tab 131 and current collector 140 in battery cell 100 according to the first embodiment of the present technology, laser welding is performed at a portion other than deflection portion 33 generated by the burring process, with the result that the welding is suppressed from being performed with air or the like being introduced. Therefore, generation of a sputter or a void is suppressed, with the result that joining failure between electrode tab 131 and current collector 140 is suppressed.

In each of battery cell 100 and the method of manufacturing the same according to the first embodiment of the present technology, the burring process is performed from the current collector 140 side toward electrode tab 131, with the result that a portion likely to be deformed due to an influence of the burring process can be disposed on tab surface 134 of electrode tab 131 opposite to current collector 140. Thus, the deformation of the metal foils can be visually recognized and a close contact state of the metal foils resulting from the deformation can be checked, with the result that laser welding can be performed from the electrode tab 131 side to the region in which the stacked metal foils are in close contact with each other. As a result, generation of a void or sputter in laser-welded portion 20 can be suppressed, thereby forming an excellent laser-welded portion 20.

In each of battery cell 100 and the method of manufacturing the same according to the first embodiment of the present technology, since laser-welded portion 20 is formed at least in the entire region inside outer shape line 12 of burring-processed portion 10 when viewed in the stacking direction of the metal foils, a joining range between electrode tab 131 and current collector 140 can be made small while securing a minimum laser-welded region. As a result, the size of battery cell 100 can be reduced.

In each of battery cell 100 and the method of manufacturing the same according to the first embodiment of the present technology, since laser-welded portion 20 is formed in the entire region inside outer shape line 12 of burring-processed portion 10 and in a range of 5 mm (L1) or less outside outer shape line 12 when viewed in the stacking direction of the metal foils, the range of laser-welded portion 20 can be wide as compared with a case where laser-welded portion 20 is formed only in the entire region inside outer shape line 12, with the result that electrode tab 131 and current collector 140 can be firmly joined to each other.

In each of battery cell 100 and the method of manufacturing the same according to the first embodiment of the present technology, depth D of burring-processed portion 10 is constituted of a depth of 70% or more of total thickness T1 of electrode tab 131, thereby facilitating deformation of the metal foils of electrode tab 131. Thus, the region in which the metal foils of electrode tab 131 are in close contact after the burring process can be visually recognized readily.

In each of battery cell 100 and the method of manufacturing the same according to the first embodiment of the present technology, first region 30 having a clearance between the stacked metal foils on tab surface 134 can be visually recognized by performing the burring process from the current collector 140 side toward electrode tab 131. Thus, second region 31 in which the metal foils are in close contact with each other in electrode tab 131 can be welded, thereby reducing welding failure between electrode tab 131 and current collector 140.

In each of battery cell 100 and the method of manufacturing the same according to the first embodiment of the present technology, since burring-processed portion 10 has a substantially conical shape, a processing range for burring-processed portion 10 can be made small as compared with a case of a burring-processed portion having a substantially square pyramid shape with a outer shape line having a square shape circumscribed to outer shape line 12, with the result that deformation of the metal foils of electrode tab 131 can be made small to attain a small influence of the burring process over electrode tab 131.

In each of battery cell 100 and the method of manufacturing the same according to the first embodiment of the present technology, by applying, to the negative electrode, the configuration in which the burring process is performed from the current collector 140 side toward electrode tab 131 and the laser welding is performed from the electrode tab 131 side, generation of a foreign substance such as a sputter of copper in the negative electrode can be suppressed. As a result, voltage failure of battery cell 100 can be suppressed.

### (Second Embodiment)

Hereinafter, a battery cell and a method of manufacturing the same according to a second embodiment of the present technology will be described. The battery cell and the method of manufacturing the same according to the second embodiment of the present technology are respectively different from battery cell 100 and the method of manufacturing the same according to the first embodiment of the present technology in terms of the configuration of the joining portion, and therefore the same configuration as that of each of battery cell 100 and the method of manufacturing the same according to the first embodiment of the present technology will not be described repeatedly.

Fig. 15 is a cross sectional view showing surroundings around a burring-processed portion of an electrode tab according to the second embodiment of the present technology. As shown in Fig. 15, laser-welded portions 20C in a joining portion 1C according to the second embodiment are each formed in a range from an outer shape line 12C of burring-processed portion 10C to 5 mm (L2) or less outside outer shape line 12C when viewed in the stacking direction of the metal foils of electrode tab 131. Each of laser-welded portions 20C is formed to avoid a deflection portion 33C.

In each of the battery cell and the method of manufacturing the same according to the second embodiment of the present technology, by performing the burring process from the current collector 140 side toward electrode tab 131, a portion (deflection portion 33C) likely to be deformed due to an influence of the burring process can be disposed on the surface of electrode tab 131 opposite to current collector 140. Thus, the deformation of the metal foils can be visually recognized and a close contact state of the metal foils resulting from the deformation can be checked, with the result that laser welding can be performed from the electrode tab 131 side to the region in which the stacked metal foils are in close contact with each other. As a result, generation of a void or sputter in laser-welded portion 20C can be suppressed without melting deflection portion 33C by input of heat of the laser welding, thereby forming an excellent laser-welded portion 20C.

### (Third Embodiment)

Hereinafter, a battery cell and a method of manufacturing the same according to a third embodiment of the present technology will be described. Since the battery cell and the manufacturing method thereof according to the third embodiment of the present technology are respectively different from battery cell 100 and the method of manufacturing the same according to the first embodiment of the present technology in terms of the configuration of the burring-processed portion, the same configuration as that of each of battery cell 100 and the method of manufacturing the same according to the first embodiment of the present technology will not be described repeatedly.

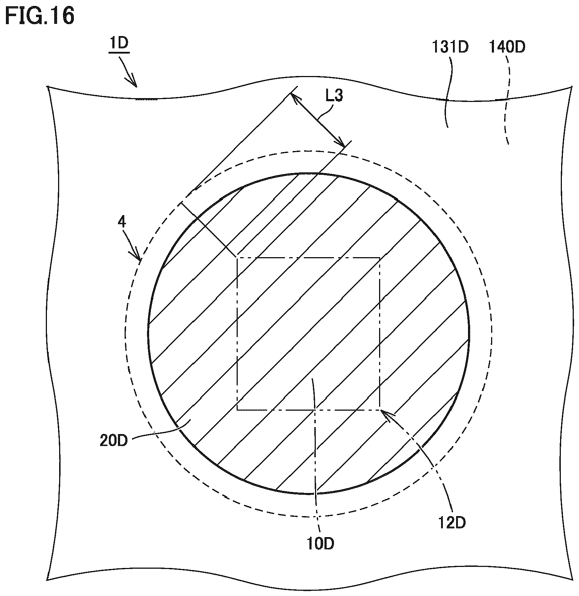

Fig. 16 is a top view showing a joining portion of the battery cell according to the third embodiment of the present technology. As shown in Fig. 16, an electrode tab 131D and a current collector 140D included in the battery cell according to the third embodiment of the present technology are joined to each other at a joining portion 1D. Burring-processed portion 10D at joining portion 1D has a substantially square pyramid shape.

When viewed in a stacking direction of metal foils of electrode tab 131D, a laser-welded portion 20D is formed in the entire region inside outer shape line 12D and in a range of 5 mm (L3) or less outside outer shape line 12D. Electrode tab 131D and current collector 140 are joined to each other at joining portion 1D within a range of a joining region 4 constituted of burring-processed portion 10D and laser-welded portion 20D.

In each of the battery cell and the method of manufacturing the same according to the third embodiment of the present technology, since burring-processed portion 10D has a square pyramid shape, a processing range for burring-processed portion 10D can be wide as compared with a case of a burring-processed portion having a conical shape constituted of an inscribed circle of outer shape line 12D in burring-processed portion 10D, with the result that a range in which the metal foils are in close contact with each other can be wide in electrode tab 131D. As a result, a laser irradiation range in electrode tab 131D can be readily secured.

It should be noted that only one burring-processed portion is provided for each of the positive electrode tab and the negative electrode tab in each of the above-described embodiments; however, it is not limited to this configuration. A plurality of burring-processed portions may be provided for each of the positive electrode tab and the negative electrode tab.

Although the embodiments of the present invention have been described and illustrated in detail, it is clearly understood that the same is by way of illustration and example only and is not to be taken by way of limitation, the scope of the present invention being interpreted by the terms of the appended claims. The scope of the present invention is defined by the terms of the claims, and is intended to include any modifications within the scope and meaning equivalent to the terms of the claims.

## Claims

1. A battery cell (100) comprising:
a case (120) including a main body (120A) provided with an opening, and a sealing plate (120B) that seals the main body (120A);
an electrode assembly (130) accommodated in the case (120) and having an electrode tab (131); and
a current collector (140) joined to the electrode tab (131), wherein
the electrode tab (131) has a stacking structure of a metal foil,
a burring-processed portion (10) is formed at least in the current collector (140) of the electrode tab (131) and the current collector (140), a width of the burring-processed portion (10) in a direction orthogonal to a stacking direction of the metal foil being narrower from the current collector (140) toward the electrode tab (131) along the stacking direction, and
a laser-welded portion (20) at which the electrode tab (131) and the current collector (140) are joined to each other is formed on the electrode tab (131) side with the electrode tab (131) and the current collector (140) being arranged side by side in the stacking direction.

2. The battery cell (100) according to claim 1, wherein
in the burring-processed portion (10), an outer shape line (12) is defined on a surface of the current collector (140) opposite to the electrode tab (131), and
the laser-welded portion (20) is formed at least in an entire region inside the outer shape line (12) when viewed in the stacking direction.

3. The battery cell (100) according to claim 2, wherein the laser-welded portion (20) is formed in the entire region inside the outer shape line (12) and in a range of 5 mm or less outside the outer shape line (12) when viewed in the stacking direction.

4. The battery cell (100) according to any one of claims 1 to 3, wherein the burring-processed portion (10) in the electrode tab (131) is formed to have a depth of 70% or more of a total thickness of the electrode tab (131).

5. The battery cell (100) according to claim 1 or 2, wherein
the electrode tab (131) has a first region (30) and a second region (31), the first region (30) being a region that protrudes opposite to the current collector (140) with a vertex of the burring-processed portion (10) as a center, the second region (31) being a region that is located around the first region (30) and that forms a substantially flat surface, and
the laser-welded portion (20) is located at least in the second region (31).

6. The battery cell (100) according to claim 1 or 2, wherein the burring-processed portion (10) has a substantially conical shape.

7. The battery cell according to claim 1 or 2, wherein the burring-processed portion (10D) has a substantially square pyramid shape.

8. The battery cell (100) according to claim 1 or 2, wherein the electrode tab (131) and the current collector (140) constitute a portion of a negative electrode of the electrode assembly (130).

9. A method of manufacturing a battery cell, the method comprising:
producing (S10) an electrode assembly (130) including an electrode tab (131) having a stacking structure of a metal foil;
disposing (S21) a current collector (140) on the electrode tab (131);
performing (S22) a burring process onto the electrode tab (131) and the current collector (140) from the current collector (140) side with the electrode tab (131) and the current collector (140) being arranged side by side in a stacking direction of the metal foil;
performing (S23) laser welding onto the electrode tab (131) and the current collector (140) from the electrode tab (131) side with the electrode tab (131) and the current collector (140) being arranged side by side in the stacking direction;
accommodating (S31) the electrode assembly (130) and the current collector (140) in a case main body (120A); and
sealing (S32), with a sealing plate (120B), the case main body (120A) in which the electrode assembly (130) and the current collector (140) are accommodated.

10. The method of manufacturing the battery cell according to claim 9, wherein
in the burring process, an outer shape line (12) is defined on a surface of the current collector (140) opposite to the electrode tab (131), and
the laser welding is performed at least onto an entire region inside the outer shape line (12) when viewed in the stacking direction.

11. The method of manufacturing the battery cell according to claim 10, wherein the laser welding is performed onto the entire region inside the outer shape line (12) and a range of 5 mm or less outside the outer shape line (12) when viewed in the stacking direction.

12. The method of manufacturing the battery cell according to any one of claims 9 to 11, wherein the burring process in the electrode tab (131) is performed to a depth of 70% or more of a total thickness of the electrode tab (131).

13. The method of manufacturing the battery cell according to claim 9 or 10, wherein
a first region (30) and a second region (31) are formed in the electrode tab (131), the first region (30) being a region that protrudes opposite to the current collector (140) with a vertex (11) in the burring process as a center, the second region (31) being a region that is located around the first region (30) and that forms a substantially flat surface, and
the laser welding is performed onto at least the second region (31).

14. The method of manufacturing the battery cell according to claim 9 or 10, wherein the burring process is performed in a form of a substantially conical shape.

15. The method of manufacturing the battery cell according to claim 9 or 10, wherein the burring process is performed in a form of a substantially square pyramid shape.

16. The method of manufacturing the battery cell according to claim 9 or 10, wherein the electrode tab (131) and the current collector (140) constitute a portion of a negative electrode of the electrode assembly (130).
